# FASCICULE DE BREVET EUROPEEN

(11) **EP 1 403 362 B1**
(45) Date de publication et mention de la délivrance du brevet: **07.12.2005**
(21) Numéro de dépôt: 03360107.1
(22) Date de dépôt: 19.09.2003
(51) Int. Cl.: C12G 3/08, C12G 1/02

(54) **Procédé de désacidification de boissons**
Verfahren zur Entsäuerung von Getränken
Beverage deacidification process

(30) Priorité: 30.09.2002 FR 0212089
(43) Date de publication de la demande: 31.03.2004
(73) Titulaire: VASLIN BUCHER (S.A.), 49290 Chalonnes sur Loire (FR)
(72) Inventeur: Bonnet, Jean, 49100 Angers (FR); De Vilmorin, Hervé, 33000 Bordeaux (FR)
(74) Mandataire: Nuss, Pierre

(56) Documents cités:
- EP-A- 0 460 339
- WO-A-01/78881
- DE-A- 2 050 917
- DATABASE WPI Section Ch, Week 198402 Derwent Publications Ltd., London, GB; Class D16, AN 1984-011741 XP002234209 & ZA 8 200 226 A (STELLENBOSCH FARMERS SERVICES), 15 août 1983 (1983-08-15)

## Description

La présente invention concerne les procédés de traitement de liquides, en particulier des liquides alimentaires, en vue de modifier leurs compositions et/ou leurs caractéristiques gustatives, nutritives ou analogues.

La présente invention a pour objet un procédé de désacidification de boissons, notamment de boissons fermentées, et en particulier à base de jus de raisins.

L'élaboration de boissons, en particulier fermentées, peut souvent s'accompagner d'une production de composés volatils qui dégradent la qualité organoleptique de ces boissons.

Parmi ces composés indésirables, le plus connu est l'acide acétique qui est présent dans les boissons acides sous formes libres, salifiées et estérifiées.

Le risque de production excessive d'acidité volatile concerne principalement les liquides subissant une fermentation alcoolique (transformation des sucres en alcool éthylique) lorsque le degré alcoolique obtenu dépasse 13%. Le risque est augmenté dans le cas de fermentations incomplètes des sucres et par des températures de fermentation supérieures à 28°C.

Ce risque est bien réel et concerne en particulier les vins rouges dont la teneur en éthanol dépasse 13 % en volume.

Des procédés pour réduire l'acidité volatile de certaines boissons sont déjà connus (par les documents DE 2 050 917, WO93/23151 et WO01/78881 par exemple).

Ces procédés connus utilisent :
- une première étape de nanofiltration, ou d'osmose inverse, de la boisson (production d'un rétentat R1 et d'un perméat P1).
- une deuxième étape de traitement du perméat P1 par résines échangeuses d'ions, faiblement anioniques, à l'issue de laquelle on obtient un perméat traité P2.
- une troisième étape d'assemblage du rétentat R1 et du perméat traité P2.

Les procédés précités présentent des limites liées à l'utilisation des résines échangeuses d'ions, à savoir :
- cycles de régénération des résines obligatoires et contraignants. Ces cycles sont très techniques, ils utilisent des produits dangereux : acide sulfurique, soude, ammoniaque ou analogue.
- difficultés pour déterminer la saturation des résines et donc risques de re-largage.
- nécessité de maîtriser le débit de passage.
- risques de pollution de la boisson si les résines sont mal préparées (odeur d'ammoniaque) ou mal choisies (incompatibilité avec des applications alimentaires)
- durée de vie limitée pour les résines (inférieure à 10 ans)
- coût du traitement relativement élevé : coûts cumulatifs colonne + résine + régénérations + coûts de personnel. En prestation de service, les tarifs habituellement pratiqués sont de l'ordre de 0,4 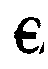 /l pour baisser de 0,5 g/l l'acidité volatile, exprimée en acide acétique.
- volume d'effluents produits très important : 500 litres de lessive de soude + 1000 litres d'eau de rinçage pour la régénération d'une colonne de 200 litres de résines, par exemple.
- entretien obligatoire des résines entre deux périodes d'utilisation.

La présente invention a pour but de diminuer fortement et, si possible, de supprimer les inconvénients mentionnés ci-dessus, en proposant une méthode alternative n'utilisant pas de résines échangeuses d'ions.

A cet effet, la présente invention a pour objet un procédé de désacidification de boissons, notamment de boissons fermentées, contenant des composés acides, et en particulier de l'acide acétique, caractérisé en ce qu'il consiste à réaliser les opérations suivantes :
- soumettre la boisson à traiter à une nanofiltration ou à une osmose inverse pour obtenir un rétentat R1 et un perméat P1, ce dernier contenant encore une partie de l'acide acétique de la boisson initiale ;
- neutraliser l'acidité du perméat P1 par ajout contrôlé d'au moins un composé basique réagissant avec les composés acides dudit perméat P1 pour former des sels correspondants ;
- soumettre le perméat P1 à une nanofiltration ou à une osmose inverse pour obtenir un rétentat R2 et un perméat P2, ce dernier étant sensiblement exempt des sels de réaction présents dans P1;
- mélanger le rétentat R1 et le perméat P2 pour former la boisson finale désacidifiée.

Deux variantes de réalisation pratiques sont envisageables pour effectuer l'ajout contrôlé de composé basique dans le perméat P1.

Ainsi, l'ajout contrôlé de composé basique dans le perméat P1 peut être réalisé par ajout d'une quantité prédéterminée d'un tel composé, calculée préalablement en fonction de la quantité de liquide à traiter et de la baisse d'acidité volatile à obtenir.

Ledit ajout contrôlé peut, en variante, également être réalisé en surveillant en temps réel l'évolution du pH dudit perméat au fur et à mesure de l'intégration d'une quantité croissante dudit composé basique.

Le procédé de désacidification selon l'invention peut aisément être mis en oeuvre pour des quantités à traiter très différentes, en adaptant de manière conséquente l'installation de traitement.

Selon un premier mode de réalisation de l'invention, plus particulièrement adapté pour des petites quantités de boissons à traiter et permettant de limiter les coûts du matériel à mettre en oeuvre, le procédé peut être effectué de manière discontinue, la boisson initiale et le permat P1 dont l'acidité a été neutralisée étant traités avec la même installation de nanofiltration ou d'osmose inverse, au cours de deux phases opératoires distinctes.

Selon un second mode de réalisation de l'invention, plus particulièrement adapté à de grandes quantités à traiter et permettant un traitement en flux continu, ce procédé peut consister en un procédé de traitement continu, dont les opérations de traitement sont effectuées en série, la boisson initiale et le perméat P1 dont l'acidité a été neutralisée étant traités par deux installations de nanofiltration ou d'osmose inverse différentes, disposées en série dans une ligne ou une boucle de traitement.

L'invention trouve une application très avantageuse, mais non limitative, dans le domaine du traitement des boissons issues de raisins ou contenant du jus de raisins.

Dans ce cas notamment, le composé basique consiste préférentiellement en de l'hydroxyde de potassium et la ou les membranes réalisant la nanofiltration ou l'osmose inverse présente(nt) un taux de rejet élevé, préférentiellement supérieur à environ 95 %, par rapport au potassium et aux sels de potassium.

En outre, selon une caractéristique additionnelle de l'invention, la ou les membranes réalisant la nanofiltration ou l'osmose inverse présente(nt) également un taux de rejet élevé, préférentiellement supérieur à environ 95%, par rapport à l'acide malique et à l'acide tartrique.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 illustre schématiquement, en deux phases, la mise en oeuvre du procédé selon l'invention, selon un premier mode de réalisation discontinue, et,
la figure 2 illustre schématiquement la mise en oeuvre du procédé selon l'invention, en relation avec un second mode de réalisation à flux continu.

Le procédé de traitement selon l'invention peut être décomposé en quatre opérations ou étapes de traitement distinctes consécutives.

Une première étape de nanofiltration ou d'osmose inverse de la boisson initiale à traiter permet d'obtenir un rétentat (R1) et un perméat (P1) riche en acide acétique. Les autres acides de la boisson, acide tartrique et acide malique par exemple pour du vin, sont fortement retenus par les membranes de l'osmoseur OI ou OI1 : le taux de rejet de l'acide tartrique ou de l'acide malique par des membranes d'osmose inverse peut atteindre 99% alors que, dans les mêmes conditions, le taux de rejet de l'acide acétique est de l'ordre de 50%. Ces membranes ont également un fort taux de rejet pour le potassium (> 95%). Les membranes pourront par exemple être du type connu sous la référence SC par la société DESAL/OSMONICS.

Une deuxième étape consiste à neutraliser l'acidité du perméat P1 en utilisant une base forte, la potasse (KOH) par exemple. La neutralisation peut être contrôlée simplement en mesurant l'évolution du pH, et en arrêtant l'ajout de base lorsque le pH > 7. L'acide acétique du perméat P1 est ainsi transformé en acétate de potassium. Ce sel est très soluble : 2530 g/l à 20°C.

Une troisième étape consiste à osmoser totalement le perméat P1 désacidifié : on obtient ainsi le rétentat R2 et le perméat P2. Le perméat P1 ayant déjà été osmosé, cette deuxième osmose est relativement facile. Grâce au fort taux de rejet de la membrane de l'osmoseur OI ou OI2 par rapport au potassium, la quasi-totalité de l'acétate de potassium est retenue dans le rétentat R2, correspondant en fin de traitement au volume mort de l'osmoseur considéré. Grâce à la forte solubilité de l'acétate de potassium, il n'y a pas de risque de cristallisation durant la concentration de R2.

Une quatrième opération consiste à assembler le rétentat R1 et le perméat P2, obtenu dans l'étape précédente, de façon à obtenir le produit final désacidifié.

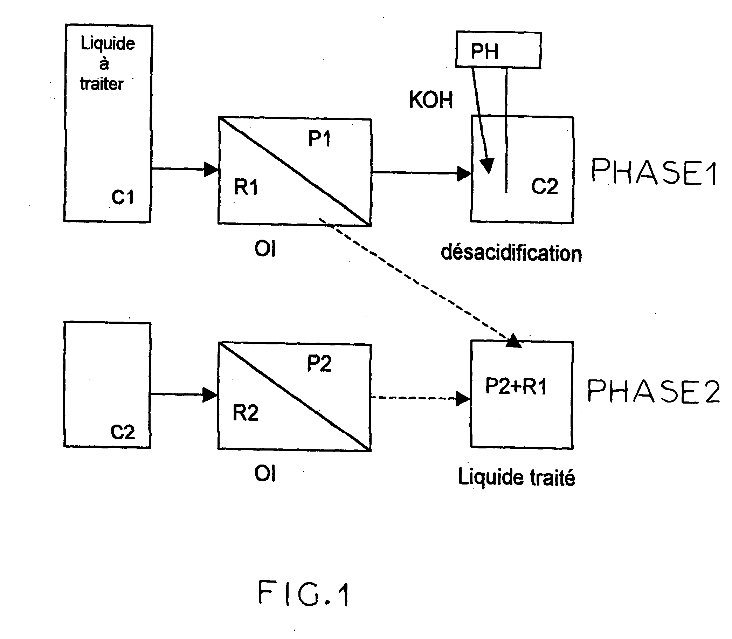

Un des avantages de l'invention est de pouvoir procéder à une diminution de l'acidité volatile de la boisson en n'utilisant qu'une seule machine ou installation, comme le montre la figure 1 des dessins annexés. En effet, les deux phases illustrées sur cette figure mettent en oeuvre le même osmoseur OI.

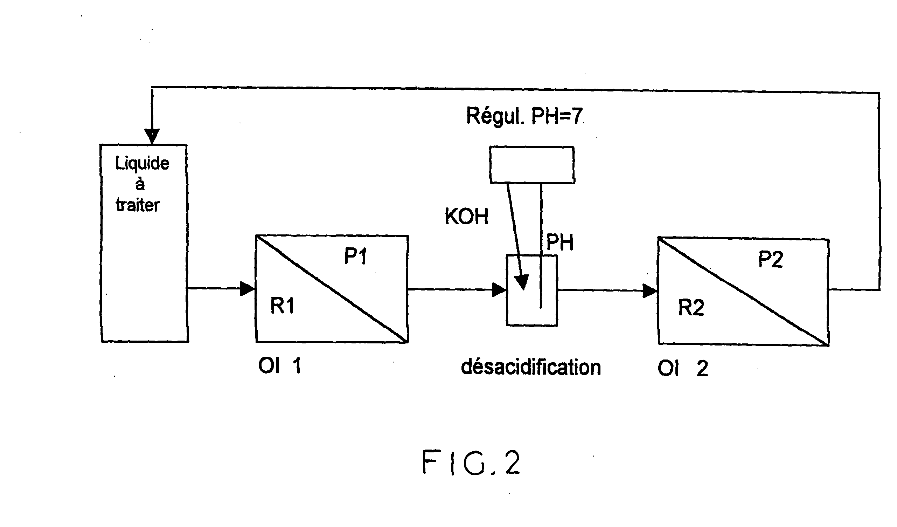

Mais il serait possible, dans le but de faire un traitement continu, d'utiliser deux machines ou installations (osmoseurs OI1 et OI2) et une neutralisation automatique du perméat P1, comme le montre la figure 2.

Dans ce dernier cas, l'osmoseur final (OI 2) peut être plus petit que le premier (OI 1), compte tenu de la facilité de la deuxième osmose et des volumes à traiter.

Il est évidemment possible d'utiliser une autre base que l'hydroxyde de potassium (hydroxyde de soude ou de calcium par exemple) pour neutraliser l'acidité volatile. La potasse est toutefois préférée pour le traitement des boissons issues du raisin car le potassium est très abondant dans le jus de raisin, ou dans le vin, et que, d'autre part, la solubilité de l'acétate de potassium est très grande, ce qui supprime tout risque de formation de cristaux pendant la concentration du rétentat de la deuxième osmose. Les quantités de produits basiques utilisés sont plus petites que celles qui sont nécessaires à la préparation et à la régénération des résines. Le bilan économique est très favorable pour le procédé selon l'invention.

Le procédé selon l'invention présente un autre avantage pratique très important pour l'opérateur : il est possible de déterminer simplement, et en temps réel, la fin du traitement sans se préoccuper des volumes réels traités.

En effet, connaissant la baisse d'acidité volatile à obtenir et le volume total de liquide à traiter, il est possible de calculer le volume de KOH (par exemple) à utiliser. Lorsque cette quantité de potasse a été consommée pour neutraliser le perméat P1, cela signifie que la totalité de l'acidité excédentaire a été éliminée et qu'il faut arrêter la première osmose.

La réaction : CH₃ COOH + K OH → CH₃ COOK + H₂O montre que pour neutraliser 60g d'acide acétique il faut utiliser 56g de potasse.

Si :
A est la baisse d'acidité volatile à obtenir en g/l d'acide acétique,
V le volume de liquide à traiter en litre, et,
T le titre de la solution de KOH en g/l, alors
le volume Q de solution KOH à utiliser est égal à :
   56.A.V litres.
   60.T
   Or, T étant connu, Q = kAV

## Revendications

1. Procédé de désacidification de boissons, notamment de boissons fermentées, contenant des composés acides, et en particulier de l'acide acétique, **caractérisé en ce qu'**il consiste à réaliser les opérations suivantes :
- soumettre la boisson à traiter à une nanofiltration ou à une osmose inverse pour obtenir un rétentat (R1) et un perméat (P1), ce dernier contenant encore une partie de l'acide acétique de la boisson initiale ;
- neutraliser l'acidité du perméat (P1) par ajout contrôlé d'au moins un composé basique réagissant avec les composés acides dudit perméat (P1) pour former des sels correspondants ;
- soumettre le perméat (P1) à une nanofiltration ou à une osmose inverse pour obtenir un rétentat (R2) et un perméat (P2), ce dernier étant sensiblement exempt des sels de réaction présents dans (P1) ;
- mélanger le rétentat (R1) et le perméat (P2) pour former la boisson finale désacidifiée.

2. Procédé selon la revendication 1, **caractérisé en ce que** l'ajout contrôlé de composé basique dans le perméat (P1) est réalisé par ajout d'une quantité prédéterminée d'un tel composé, calculée préalablement en fonction de la quantité de liquide à traiter et de la baisse d'acidité volatile à obtenir.

3. Procédé selon la revendication 1, **caractérisé en ce que** l'ajout contrôlé de composé basique dans le perméat (P1) est réalisé en surveillant en temps réel l'évolution du pH dudit perméat au fur et à mesure de l'intégration d'une quantité croissante dudit composé basique.

4. Procédé selon l'une quelconque des revendications 1 à 3, **caractérisé en ce qu'**il est effectué de manière discontinue, la boisson initiale et le permat (P1) dont l'acidité a été neutralisée étant traités avec la même installation de nanofiltration ou d'osmose inverse, au cours de deux phases opératoires distinctes.

5. Procédé selon l'une quelconque des revendications 1 à 3, **caractérisé en ce qu'**il consiste en un procédé de traitement continu, dont les opérations de traitement sont effectuées en série, la boisson initiale et le perméat (P1) dont l'acidité a été neutralisée étant traités par deux installations de nanofiltration ou d'osmose inverse différentes, disposées en série dans une ligne ou une bouche de traitement.

6. Procédé selon l'une quelconque des revendications 1 à 5, **caractérisé en ce que**, notamment dans le cas de traitement de boissons issues du raisin ou contenant du jus de raisin, le composé basique consiste en de l'hydroxyde de potassium et la ou les membranes réalisant la nanofiltration ou l'osmose inverse présente(nt) un taux de rejet élevé, préférentiellement supérieur à environ 95 %, par rapport au potassium et aux sels de potassium.

7. Procédé selon la revendication 6, **caractérisé en ce que** la ou les membranes réalisant la nanofiltration ou l'osmose inverse présente(nt) également un taux de rejet élevé, préférentiellement supérieur à environ 95%, par rapport à l'acide malique et à l'acide tartrique.

## Patentansprüche

1. Verfahren zur Entsäuerung von Getränken, insbesondere von fermentierten Getränken, die Säureverbindungen und insbesondere Essigsäure enthalten,
**dadurch gekennzeichnet,**
**dass** es darin besteht, die folgenden Schritte durchzuführen:
- Durchführen einer Nanofiltration oder einer umgekehrten Osmose am zu behandelnden Getränk, um ein Retentat (R1) oder ein Permeat (P1) zu erhalten, wobei dieses letztgenannte ferner einen Teil der Essigsäure des ursprünglichen Getränks enthält;
- Neutralisieren des Säuregehalts des Permeats (P1) durch kontrollierte Beigabe von mindestens einer basischen Verbindung, die mit den sauren Verbindungen des Permeats (P1) reagiert, um entsprechende Salze zu bilden;
- Durchführen einer Nanofiltration oder einer umgekehrten Osmose am Permeat (P1), um ein Retentat (R2) und ein Permeat (P2) zu erhalten, wobei dieses letztgenannte im Wesentlichen frei von den in (P1) vorhandenen Reaktionssalzen ist;
- Mischen des Retentats (R1) und des Permeats (P2), um das endgültige entsäuerte Getränk zu bilden.

2. Verfahren nach Anspruch 1,
**dadurch gekennzeichnet,**
**dass** die kontrollierte Beigabe einer basischen Verbindung in das Permeat (P1) durch Beigabe einer vorbestimmten Menge einer solchen Verbindung durchgeführt wird, die vorher in Abhängigkeit von der zu behandelnden Flüssigkeit und der zu erzielenden Verringerung des flüchtigen Säuregehalts berechnet wird.

3. Verfahren nach Anspruch 1,
**dadurch gekennzeichnet,**
**dass** die kontrollierte Beigabe einer basischen Verbindung in das Permeat (P1) durchgeführt wird, wobei in Echtzeit die Entwicklung des pH-Werts des Permeats im Zuge der Eingliederung einer wachsenden Menge der basischen Verbindung überwacht wird.

4. Verfahren nach einem der Ansprüche 1 bis 3,
**dadurch gekennzeichnet,**
**dass** es diskontinuierlich erfolgt, wobei das ursprüngliche Getränk und das Permeat (P1), dessen Säuregehalt neutralisiert wurde, mit derselben Anlage zur Nanofiltration oder umgekehrten Osmose während zweier getrennter Verfahrensschritte behandelt werden:

5. Verfahren nach einem der Ansprüche 1 bis 3,
**dadurch gekennzeichnet,**
**dass** es in einem kontinuierlichen Behandlungsverfahren besteht, dessen Behandlungsschritte in Serie erfolgen, wobei das ursprüngliche Getränk und das Permeat (P1), dessen Säuregehalt neutralisiert wurde, mit zwei unterschiedlichen Anlagen zur Nanofiltration oder umgekehrten Osmose behandelt werden, die in Serie in einer Behandlungsanlage oder -vorrichtung angeordnet sind.

6. Verfahren nach einem der Ansprüche 1 bis 5,
**dadurch gekennzeichnet,**
**dass** insbesondere im Falle einer Behandlung von Getränken, die von Weintrauben stammen oder Traubensaft enthalten, die basische Verbindung in Kaliumhydroxid besteht und die Membran(en), die die Nanofiltration oder die umgekehrte Osmose durchführt(en), eine hohe Ausschussrate, vorzugsweise über ungefähr 95 %, im Verhältnis zum Kalium und zu den Kaliumsalzen aufweist(en).

7. Verfahren nach Anspruch 6,
**dadurch gekennzeichnet,**
**dass** die Membran(en), die die Nanofiltration oder die umgekehrte Osmose durchführt(en), auch eine hohe Ausschussrate, vorzugsweise über ungefähr 95 %, im Verhältnis zur Apfelsäure und zur Weinsäure aufweist(en).

## Claims

1. Process for the deacidification of beverages, in particular of fermented beverages, comprising acidic compounds and in particular acetic acid, **characterized in that** it consists in carrying out the following operations:
- subjecting the beverage to be treated to nanofiltration or to reverse osmosis in order to obtain a retentate (R1) and a permeate (P1), the latter still comprising a portion of the acetic acid of the initial beverage;
- neutralizing the acidity of the permeate (P1) by controlled addition of at least one basic compound which reacts with the acidic compounds of the said permeate (P1) to form corresponding salts;
- subjecting the permeate (P1) to nanofiltration or to reverse osmosis in order to obtain a retentate (R2) and a permeate (P2), the latter being substantially devoid of the reaction salts present in (P1);
- mixing the retentate (R1) and the permeate (P2) in order to form the final deacidified beverage.

2. Process according to Claim 1, **characterized in that** the controlled addition of basic compound to the permeate (P1) is carried out by addition of a predetermined amount of such a compound, calculated beforehand according to the amount of liquid to be treated and according to the fall in volatile acidity to be obtained.

3. Process according to Claim 1, **characterized in that** the controlled addition of basic compound to the permeate (P1) is carried out by monitoring in real time the change in the pH of the said permeate as an increasing amount of the said basic compound is incorporated.

4. Process according to any one of Claims 1 to 3, **characterized in that** it is carried out batchwise, the initial beverage and the permeate (P1), the acidity of which has been neutralized, being treated with the same nanofiltration or reverse osmosis plant during two separate operational phases.

5. Process according to any one of Claims 1 to 3, **characterized in that** it consists of a continuous treatment process, the treatment operations of which are carried out in series, the initial beverage and the permeate (P1), the acidity of which has been neutralized, being treated with two different nanofiltration or reverse osmosis plants arranged in series in a treatment line or loop.

6. Process according to any one of Claims 1 to 5, **characterized in that**, in particular in the case of the treatment of beverages resulting from grapes or comprising grape juice, the basic compound consists of potassium hydroxide and the membrane or membranes used to perform the nanofiltration or the reverse osmosis exhibit(s) a high level of rejection, preferably of greater than approximately 95%, with respect to potassium and to potassium salts.

7. Process according to Claim 6, **characterized in that** the membrane or membranes used to perform the nanofiltration or the reverse osmosis also exhibit(s) a high level of rejection, preferably of greater than approximately 95%, with respect to malic acid and to tartaric acid.
